Europäisches Patentamt

(19) European Patent Office

Office européen des brevets

(11) Numéro de publication: **0 050 079**
**B1**

(12) **FASCICULE DE BREVET EUROPEEN**

(45) Date de publication du fascicule du brevet: **12.12.84**

(21) Numéro de dépôt: **81401578.0**

(22) Date de dépôt: **13.10.81**

(51) Int. Cl.³: **F 16 M 11/04,** A 61 G 13/00,
E 04 G 7/18, F 16 B 5/07

(54) **Dispositif d'articulation à crabots à déverrouillage de sécurité.**

(30) Priorité: **15.10.80 FR 8022001**

(43) Date de publication de la demande:
**21.04.82 Bulletin 82/16**

(45) Mention de la délivrance du brevet:
**12.12.84 Bulletin 84/50**

(84) Etats contractants désignés:
**DE FR**

(56) Documents cités:
**FR-A- 831 755**
**US-A-4 018 412**
**US-A-4 019 708**

(73) Titulaire: **A L M**
**154, rue de l'Université**
**F-75007 Paris (FR)**

(72) Inventeur: **Hubert, Jean**
**67, avenue Parmentier**
**F-75011 Paris (FR)**

(74) Mandataire: **Liboz, André et al**
**L'AIR LIQUIDE SOCIETE ANONYME POUR**
**L'ETUDE ET L'EXPLOITATION DES PROCEDES**
**GEORGES CLAUDE 75, Quai d'Orsay**
**F-75321 Paris Cédex 07 (FR)**

Courier Press, Leamington Spa, England.

## Description

L'invention concerne un dispositif d'articulation à crabots à déverrouillage de sécurité pour articuler sur un axe une pièce mobile par rapport à une pièce de référence au moyen de crabots à dents inclinées se faisant vis-à-vis sur la pièce mobile et sur la pièce de référence autour de l'axe d'articulation, la pièce mobile étant montée en porte-à-faux sur l'axe de manière que son centre de gravité soit excentré par rapport audit axe, ce dispositif comprenant un dispositif de retenue agissant sur la pièce mobile suivant ledit axe et comportant un organe de commande et une came.

Ce type de dispositifs est appliqué à un grand nombre de domaines et notamment à celui des leviers réglables, panneaux mobiles, etc. Dans les dispositifs connus (voir par exemple le FR—A—831 755), le desserrage progressif obtenu par action sur l'organe de commande libère brusquement l'articulation, à un instant mal déterminé, ce qui peut provoquer une rotation brutale de la pièce en porte-à-faux. Une telle rotation peut être nuisible ou dangereuse dans certaines applications, notamment dans le domaine des éléments mobiles de tables d'opérations.

L'invention a pour but de fournir un dispositif d'articulation à crabots permettant d'éviter de façon sur le déverrouillage incontrôlé de l'articulation et toute rotation brutale de la pièce en porte-à-faux lors du déverrouillage.

A cet effet, l'invention a pour objet un dispositif d'articulation à crabots à déverrouillage de sécurité pour articuler sur un axe une pièce mobile par rapport à une pièce de référence au moyen de crabots à dents inclinées se faisant vis-à-vis sur la pièce mobile et sur la pièce de référence autour de l'axe d'articulation, la pièce mobile étant montée en porte-à-faux sur l'axe de manière que son centre de gravité soit excentré par rapport audit axe, ce dispositif comprenant un dispositif de retenue agissant sur la pièce mobile suivant ledit axe et comportant un organe de commande et une came, dispositif caractérisé en ce que le came présente quatre surfaces de came adjacentes, à savoir une première surface d'engrènement total des crabots, une seconde surface de désengrènement partiel, une troisième surface proéminente permettant un réengrènement partiel, et une quatrième surface de désengrènement total des crabots, et en ce que l'inclinaison des dents des crabots est telle que la résultante axiale sur les dents des crabots du couple engendré par la masse en porte-à-faux de la pièce mobile dans la position de désengrènement partiel déterminée par la seconde surface de came soit supérieure à la résultante en sens opposé de l'effort qu'il est normalement possible d'exercer manuellement sur l'organe de commande.

Il en résulte que lors du déverrouillage, la pièce mobile est supportée manuellement et donc retenue, de telle sorte que toute rotation brutale est évitée.

Selon d'autres caractéristiques de l'invention, l'une des deux pièces portant des crabots comporte une chape munie d'une fente dont le plan est perpendiculaire à l'axe d'articulation et déterminant deux branches traversées par ledit axe, la chape étant sollicitée en pression lorsque les crabots atteignent une position proche de leur position d'engrènement total, et la pièce comportant une chape est en deux parties articulées autour d'un pivot dont l'axe est parallèle au plan de la fente, l'alésage pour le pivot de la partie qui comporte la fente étant en communication avec ladite fente de telle sorte que l'autre partie, solidarisée au pivot, soit immobilisée en rotation par rapport à la première lorsque la chape est sollicitée en pression.

Ainsi, il est possible d'obtenir une articulation double dont les axes, orthogonaux, permettent un mouvement dans deux plans perpendiculaires.

D'autres caractéristiques et avantages de l'invention ressortiront de la description ci-après, donnée à titre d'exemple non limitatif, et correspondant à une forme de réalisation représentée sur les dessins dans lesquels:

— la figure 1 est une vue de dessus d'un dispositif d'articulation selon l'invention en position verrouillée, c'est-à-dire en position d'engrènement total des crabots;
— la figure 2 est une vue de dessus du même dispositif dans une phase de désengrènement partiel des crabots;
— la figure 3 est une vue partielle de dessus de la pièce mobile et de l'organe de verrouillage dans une position stable de désengrènement partiel des crabots;
— la figure 4 est une vue de dessus du dispositif dans une position de réengrènement presque total des crabots;
— la figure 5 est une vue de dessus du dispositif en position de désengrènement total des crabots.

Le dispositif d'articulation représenté sur les figures est constitué par une pièce 1 formant moyeu, mobile en rotation par rapport à une pièce 2 prise comme référence, grâce à un axe d'articulation 3 sur lequel elle est montée en porte-à-faux, son centre de gravité étant excentré par rapport à l'axe. Les différentes positions relatives possibles des deux pièces l'une par rapport à l'autre sont définies par des crabots 11, 21 à parois latérales inclinées, et par conséquent en forme de triangles ou de trapèzes prévus respectivement sur les deux pièces et coopérant de sorte à pouvoir être engrenés ou désengrenés en fonction de la position d'un organe de commande 4, ici sous la forme d'une poignée, muni de surfaces de came appropriées.

Ainsi, le couple exercé par la masse excentrée de la pièce mobile ou moyeu 1 se traduit, sous l'effet de la coopération des rampes constituées par les parois inclinées des crabots, par une force tendant à faire tourner la pièce mobile 1, et par une force résultante axiale tendant à l'écarter de la pièce de référence 2 en direction des surfaces de came de l'organe de commande 4; cet écartement se traduit en fait par un éloignement des extrémités des dents des crabots de la pièce mobile par rapport au fond des entailles des crabots de la pièce de référence, ainsi bien entendu qu'un éloignement du fond des entailles des crabots de la pièce mobile par rapport aux extrémités des dents des crabots de la pièce de référence.

A l'engrènement ou au désengrènement total des crabots correspond donc respectivement un blocage ou une totale liberté en rotation des pièces 1, 2 de l'articulation.

La pièce mobile 1 est donc ici portée par l'axe d'articulation 3, entre la pièce de référence 2 et l'organe de commande 4, mais des organes de contact appropriés tels qu'une rondelle de contact 5 peuvent être intercalés entre la pièce mobile 1 et l'organe de commande 4.

La pièce mobile 1 est ici réalisée en deux parties 1A, 1B articulées par un pivot 6; la partie 1A portée par l'axe d'articulation 3 est munie d'une chape dont les deux branches 12, 13 sont séparées par une fente 14 dont le plan s'étend perpendiculairement audit axe d'articulation 3; l'axe d'articulation 3 traverse donc les deux branches 12, 13 et la fente 14; l'axe du pivot 6 est parallèle au plan de la fente 14 et par conséquent orthogonal à l'axe d'articulation 3, et la fente 14 débouche dans l'alésage de la partie 1A prévu pour le passage du pivot 6, tandis que ce dernier est lié en rotation à la partie 1B, de telle sorte qu'à proximité de la position d'engrènement total des crabots, une sollicitation en pression de la chape tendant à diminuer la largeur de la fente provoque par pincement l'immobilisation en rotation du pivot 6 et par conséquent de la partie 1B par rapport à la partie 1A.

L'organe de commande 4 est monté sur l'axe d'articulation grâce à un pivot 7 perpendiculaire à celui-ci, de telle sorte qu'il puisse pivoter dans un plan perpendiculaire à ce pivot 7; comme il a déjà été mentionné, les surfaces de l'organe de commande 4, successivement en contact avec la pièce mobile 1 ou ici la rondelle de contact 5 lors de la rotation dudit organe de commande, sont réalisées sous la forme de surfaces de came adjacentes permettant un éloignement plus ou moins grand des pièces 1, 2 constituant l'articulation à crabots.

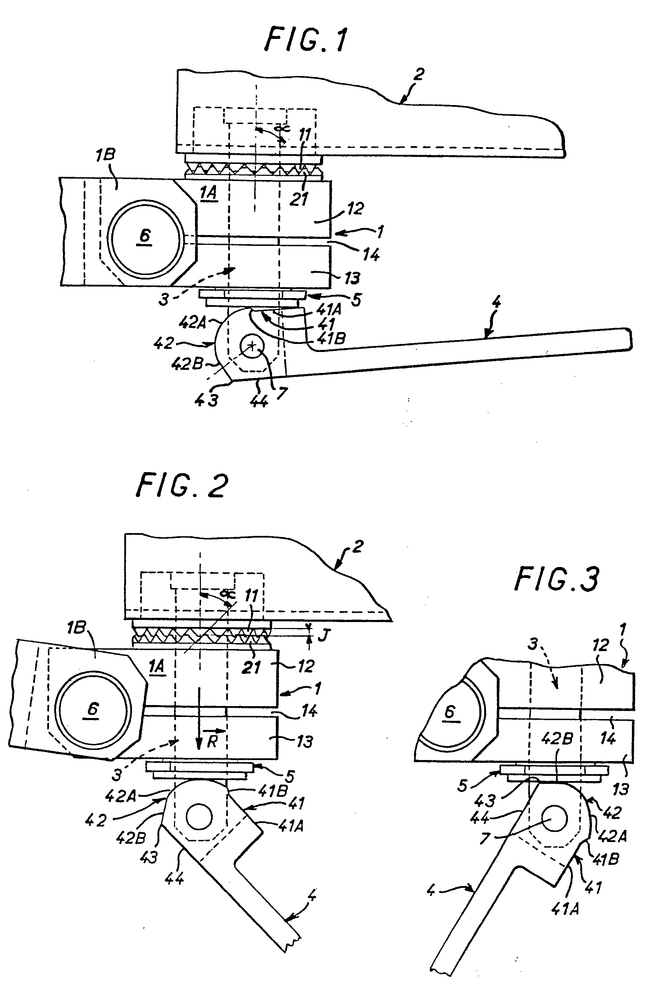

A une extrémité, la première surface de came 41 comporte des zones relativement éloignées du pivot 7, et en particulier une zone rectiligne 41A et une proéminence 41B dont une paroi latérale est raccordée à cette zone rectiligne 41A; comme on peut le constater sur la figure 1, lorsque la proéminence 41B et une partie de la zone rectiligne 41A sont en appui contre la rondelle 5, la pièce mobile 1 est maintenue contre la pièce 2 et il y a engrènement total des crabots 11, 21, dans une première position, stable, de l'organe de commande 4, correspondant à une position angulaire relative donnée des pièces 1, 2; dans cette position, le plan diamétral du pivot 7 passant par le sommet de la proéminence 41B, qui est disposé perpendiculairement au plan de la zone rectiligne 41A, fait un angle de faible valeur avec l'axe géométrique de l'axe d'articulation 3.

Dans cette position d'engrènement total des crabots, non seulement la pièce mobile 1 est immobilisée par rapport à l'autre, mais la chape de cette pièce mobile 1 est sollicitée en pression et sa seconde partie 1B est donc immobilisée en rotation par rapport à sa première partie 1A.

La seconde surface de came 42 succède à la première du côté de la paroi de la proéminence 41B qui est opposée à la paroi raccordée à la zone rectiligne 41A; cette seconde surface de came 42 commence par une partie courbe 42A se rapprochant du pivot 7 au fur et à mesure de sont éloignement de la première; elle permet, à cause du poids en porte-à-faux de la pièce mobile 1 par rapport à l'axe d'articulation 3, l'éloignement des pièces 1, 2 par désengrènement progressif des crabots par suite de la modifications de la position angulaire relative de ces deux pièces 1, 2. Cependant, l'extrémité de cette seconde surface 42, qui est opposée à la première surface 41, est prévu pour laisser entre les pièces 1, 2 un jeu J insuffisant pour provoquer un désengrènement total des crabots; succédant à la partie courbe 42A, cette extrémité est située sur une partie plane 42B de telle sorte qu'elle corresponde à une position stable de l'organe de commande (figure 3).

Lorsqu'une zone de cette surface de came 42 est en appui contre la rondelle 5 (figure 2), la chape n'est plus sollicitée en pression, le pivot 6 est libéré, et la rotation relative des parties 1A, 1B de la pièce mobile est rendue possible.

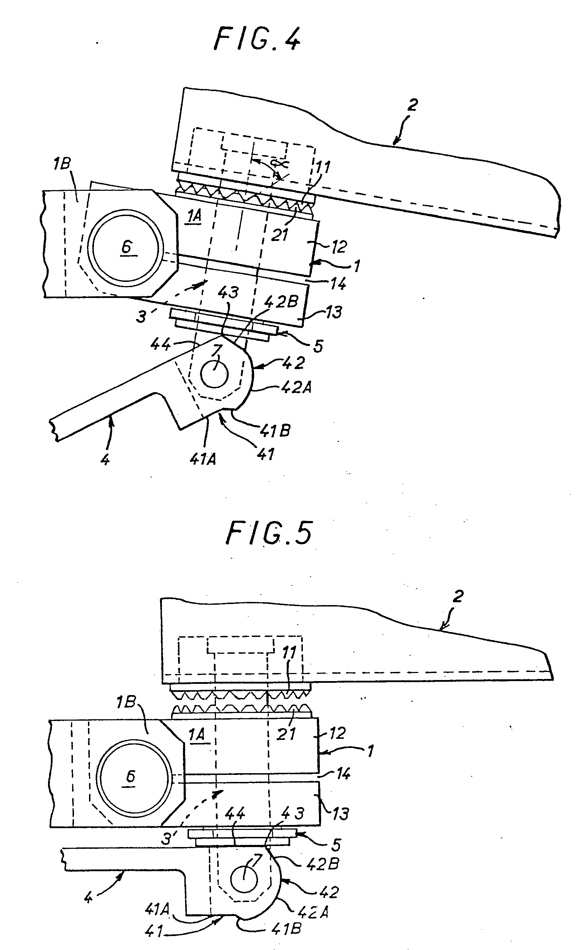

A la suite de la deuxième surface de came 42, est prévue une troisième surface de came 43 plus éloignée du pivot 7, constituée par une proéminence, de telle sorte que lorsque cette proéminence 43 défile contre la rondelle 5, on repasse par une position d'engrènement presque total des crabots (figure 4). Cependant, il faut noter que le défilement de la proéminence 43 contre la rondelle 5 ne peut être provoqué que sous certaines conditions. En effet, il a été vu qu'il existe dans la direction longitudinale de l'axe d'articulation 3 une force R due au couple engendré par le poids en porte-à-faux de la pièce mobile 1 et s'opposant au rapprochement des pièces 1, 2; l'angle $\alpha$ de taille des crabots est calculé de telle sorte que cette force ne puisse pas être vaincue par une action manuelle sur l'organe de commande 4 développant une force en sens opposé; ainsi, une telle action manuelle sur cet organe ne permet pas le franchissement de la proéminence 43, puisqu'elle ne permet pas le retour des pièces 1, 2 vers leur position angulaire relative initiale de la figure 1; en conséquence, le franchissement de la proéminence 43 ne peut être obtenu qu'en ramenant les pièces 1, 2 à proximité immédiate de leur position relative initiale par exemple en supportant maneuellement la pièce mobile 1, ce qui revient à diminuer le couple dû à la masse en porte-à-faux; alors seulement, ces deux pièces 1, 2 peuvent être rapprochées suffisamment pour permettre le franchissement de la proéminence 43 et le contact de la quatrième surface de came (surface d'extrémité) avec la rondelle 5.

Cette quatrième surface de came 44, en s'éloignant de la troisième, se rapproche du pivot 7; elle présente ici un profil rectiligne, et la poursuite du glissement de la proéminence 43 contre la rondelle 5 permet d'atteindre progressivement en écartement des pièces 1, 2 correspondant à un désengrènement total des crabots; ce profil rectiligne permet une position stable de l'organe de commande 4 lorsque les pièces 1, 2 sont libres en rotation l'une par rapport à l'autre (figure 5); dans ces conditions, les deux parties 1A, 1B de la pièce mobile 1 sont également libres en rotation l'une par rapport à l'autre.

En conséquence l'actionnement de la poignée de commande 4 en rotation dans le plan horizontal (donc vers le bas de la figure 1) permet de débloquer les crabots 11, 21 d'un jeu J insuffisant pour que les dents puissent s'échapper mais permettant seulement un léger mouvement de rotation de la pièce mobile 1 sur l'axe 3, dû à son poids; la chape n'étant plus sollicitée, le pivot 6 est libéré, permettant l'articulation de la partie 1B de la pièce mobile 1 dans un plan horizontal. Cette situation persiste pendant toute la rotation de la poignée (figure 2) jusqu'au moment où la zone 42B de la came est en appui contre la rondelle 5 (figure 3); il n'est alors plus possible de poursuivre le mouvement de rotation de la poignée 4, à moins de supporter la pièce mobile 1 pour permettre un réenclenchement presque total des crabots (figure 4); dans ce cas, il devient donc possible de manoeuvrer la poignée 4 jusqu'à sa position stable finale dans laquelle les crabots sont désengrénés (figures 5).

Cette position peut donc être obtenue avec le minimum de risques de rotation incontrôlée, pouvant être dangereuse, de la pièce mobile.

Bien entendu, l'invention n'est pas limitée à la forme de réalisation ci-dessus décrite et représentée, à partir de laquelle on pourra prévoir d'autres formes de réalisation sans sortir du cadre de l'invention; on pourra par exemple prévoir une partie mobile avec ou sans chape, en une ou plusieurs parties, ou encore une partie fixe avec ou sans chape, en une ou plusieurs parties.

**Revendications**

1. Dispositif d'articulation à crabots à déverrouillage de sécurité pour articuler sur un axe (3) und pièce mobile (1) par rapport à une pièce de référence (2) au moyen de crabots à dents inclinées se faisant vis-à-vis sur la pièce mobile (1) et sur la pièce de référence (2) autour de l'axe d'articulation (3), la pièce mobile (1) étant montée en porte-à-faux sur l'axe de manière que son centre de gravité soit excentré par rapport audit axe, ce dispositif comprenant un dispositif de retenue agissant sur la pièce mobile (1) suivant ledit axe et comportant un organe de commande (4) et une came, caractérisé en ce que la came présentent quatre surfaces de came adjacentes (41, 42, 43, 44), à savoir une première surface d'engrènement total (41) des crabots, une seconde surface de désengrènement partiel (42), une troisième surface proéminente (43) permettant un réengrènement partiel, et une quatrième surface de désengrènement total (44) des crabots, et en ce que l'inclinaison ($\alpha$) des dents des crabots (11, 21) est telle que la résultante axiale (R) sur les dents des crabots (11, 21) du couple engendré par la masse en porte-à-faux de la pièce mobile (1) dans la position de désengrènement partiel déterminée par la seconde surface de came (42) soit supérieure à la résultante en sens opposé de l'effort qu'il est normalement possible d'exercer manuellement sur l'organe de commande (4).

2. Dispositif selon la revendication 1, caractérisé en ce que ladite première surface (41) comporte une partie rectiligne (41A) et une proéminence (41B) qui relie cette partie à ladite seconde surface (42), de façon à conférer à l'organe de commande (4) une position stable d'engrènement total.

3. Dispositif selon l'une des revendications 1 et 2, caractérisé en ce que l'organe de commande (4) est une poignée articulée à l'axe d'articulation (3) par un pivot (7) perpendiculaire audit axe (3), les surfaces de adjacents (41, 42, 43, 44) étant agencées autour dudit pivot (3).

4. Dispositif selon l'une quelconque des revendications 1 à 3, caractérisé en ce que l'une des deux pièces (1, 2) portant des crabots (11, 21) comporte une chape munie d'une fente (14) dont le plan est perpendiculaire à l'axe d'articulation (3) et déterminant deux branches (12, 13) traversées par ledit axe (3), la chape étant sollicitée en pression lorsque les crabots (11, 21) atteignent une position proche de leur position d'engrènement total.

5. Dispositif selon la revendication 4, caractérisé en ce que la pièce comportant une chape est en deux parties (1A, 1B) articulées autour d'un pivot (6) dont l'axe est parallèle au plan de la fente (14), l'alésage pour le pivot (6) de la partie (1A) qui comporte la fente (14) étant en communication avec ladite fente (14), de telle sorte que l'autre partie (1B), solidarisée au pivot (6), soit immobilisée en rotation par rapport à la première lorsque la chape est sollicitée en pression.

6. Dispositif selon l'une des revendications 4 et 5, caractérisé en ce que la chape est réalisée dans la pièce mobile (1).

7. Dispositif selon l'une des revendications 5 et 6, caractérisé en ce que la seconde surface (42) a un profil courbe à rayon progressivement décroissant (42A) suivi d'une partie plane (42B), de façon à conférer à l'organe de commande (4) une position stable de désengrènement partiel.

8. Dispositif selon l'une quelconque des revendications 1 à 7, caractérisé en ce que ladite quatrième surface (44) est plane, de façon à conférer à l'organe de commande (4) une position stable de désengrènement total.

## Claims

1. Toothed unlocking device for a safety joint to articulate a mobile piece (1) to a reference piece (2) by means of a toothing comprising inclined teeth arranged on the mobile piece (1) and on the reference piece (2) around the articulation axis (3) opposite to each other, the mobile piece (1) being mounted on the axis self-supporting so that its center of gravity is offset relating to said axis, and said device having a retension means actuating the mobile piece (1) following the axis and having a control member (4) and a cam, characterized in that the cam has four adjacent cam surfaces (41, 42, 43, 44), namely a first surface (41) of a total engagement of the toothing, a second surface (42) for a partial disengagement, a third protruding surface (43) permitting partial reengagement and a fourth surface (44) for total disengagement of the toothing, and that the inclination $(\alpha)$ of the teeth of the toothing (11, 21) is so that the axial resultant (R) on the teeth of the toothing (11, 21) of the couple resulting from the self-supporting mass of the mobile piece (1) in the position of the partial disengagement, determined by the second cam surface (42) is in the opposite sense greater than the resultant of the force which can be applied manually to the control member (4) normally.

2. Device according to claim 1, characterized in that the first surface (41) comprises a straight part (41A) and a protrusion (41B) connecting said part with the second surface (42), so that there is distributed a stable position of the total engagement to the control member (4).

3. Device according to one of the claims 1 and 2, characterized in that the control member (4) is a grip articulated to the axis of articulation (3) by a pivot (7) perpendicular to said axis (3), the adjacent cam surfaces (41, 42, 43, 44) being arranged around said pivot (7).

4. Device according to one of the claims 1 to 3, characterized in that one of the two pieces (1, 2) carrying the toothing (11, 21) comprises a capping provided with a slot (14) the plain of which is perpendicular to the axis of articulation (3), and determining two branches (12, 13) crossed by the axis (3), the capping being pressure loaded, when the toothing (11, 21) reaches a position near to its position for total engagement.

5. Device according to claim 4, characterized in that the piece comprising a capping consists of two parts (1A, 1B) articulated around a pivot (6) the axis of which is parallel to the plain of the slot (14), the bore for the pivot (6) of the part (1A) comprising the slot (14) being in communication with said slot (14) so that the other part (1B) connected with the pivot (6) is maintained immobilized for rotation in relation to the first one, if the capping is pressure loaded.

6. Device according to one of the claims 4 and 5, characterized in that the capping is provided in the mobile piece (1).

7. Device according to one of the claims 5 and 6, characterized in that the second surface (42) has a curved profile having a progressively decreasing radius (42A) followed by a plain part (42B) so that there is imparted a stable position of a partial disengagement to the control member (4).

8. Device according to one of the claims 1 to 7, characterized in that the fourth surface (44) is plain so that there is imparted a stable position of the total disengagement to the control member (4).

## Patentansprüche

1. Gelenkvorrichtung mit einer Verzahnung zur Sicherheitsentriegelung zum Anlenken eines beweglichen Teils (1) auf einer Achse (3) an ein Bezugsteil (2) mit Hilfe einer Verzahnung mit geneigten Zähnen, die auf dem beweglichen Teil (1) und auf dem Bezugsteil (2) um die Anlenkungsachse (3) herum einander gegenüberstehen, wobei das bewegliche Teil (1) freitragend derart auf der Achse angebracht ist, daß sein Schwerpunkt gegenüber dieser Achse versetzt ist, und wobei diese Vorrichtung eine Rückhaltevorrichtung besitzt, die der Achse folgend auf das bewegliche Teil (1) einwirkt und ein Steuerorgan (4) und einen Nokken besitzt, dadurch gekennzeichnet, daß der Nocken vier aneinandergrenzende Nockenoberflächen (41, 42, 43, 44) aufweist, nämlich eine erste Oberfläche (41) für totalen Eingriff der Verzahnung, eine zweite Oberfläche (42) für Teilauskupplung, eine dritte vorspringende Oberfläche (43), die einen Teilwiedereingriff gestattet, und eine vierte Oberfläche (44) für Totalauskupplung der Verzahnung, und daß die Neigung $(\alpha)$ der Zähne der Verzahnung (11, 21) derart ist, daß die axiale Resultante (R) auf den Zähnen der Verzahnung (11, 21) der Kupplung, erzeugt durch die freitragende Masse des beweglichen Teils (1) in der Stellung der Teilauskupplung, bestimmt durch die zweite Nockenoberfläche (42), in umgekehrtem Sinne größer als die Resultante der Kraft ist, die normalerweise manuell auf das Steuerorgan (4) ausgeübt werden kann.

2. Vorrichtung nach Anspruch 1, dadurch gekennzeichnet, daß die erste Oberfläche (41) einen geradlinigen Teil (41A) und einen Vorsprung (41B), der diesen Teil mit der zweiten Oberfläche (42) verbindet, derart besitzt, daß dem Steuerorgan (4) eine stabile Position des Totaleingriffes verliehen wird.

3. Vorrichtung nach einem der Ansprüche 1 und 2, dadurch gekennzeichnet, daß das Steuerorgan (4) ein Griff ist, der an die Gelenkachse (3) mit einer Drehachse (7) senkrecht zu dieser Achse (3) angelenkt ist, wobei die einander benachbarten Nockenoberflächen (41, 42, 43, 44) um diese Drehachse (7) herum angeordnet sind.

4. Vorrichtung nach einem der Ansprüche 1 bis 3, dadurch gekennzeichnet, daß eines der beiden eine Verzahnung (11, 21) tragenden Teile (1, 2) eine Abdeckung besitzt, die mit einem Schlitz (14) versehen ist, dessen Ebene senkrecht zu der Gelenkachse (3) ist, und zwei von der Achse (3) durchquerte Arme (12, 13) begrenzt, wobei die Abdeckung druckbelastet ist, wenn die Verzahnung (11, 21) eine Position nahe ihrer Position für totalen Eingriff erreicht.

5. Vorrichtung nach Anspruch 4, dadurch gekennzeichnet, daß das eine Abdeckung besitzende Teil aus zwei Teilen (1A, 1B) besteht, die um eine Drehachse (6) angelenkt sind, deren Achse parallel zur Ebene des Schlitzes (14) ist, wobei die Bohrung für die Drehachse (6) des Teils (1A), das den Schlitz (14) besitzt, in Verbindung mit diesem Schlitz (14) derart ist, daß das andere mit der Drehachse (6) verbundene Teil (1B) drehfest gegenüber dem ersten gehalten ist, wenn die Abdeckung druckbelastet ist.

6. Vorrichtung nach einem der Ansprüche 4 und 5, dadurch gekennzeichnet, daß die Abdeckung in dem beweglichen Teil (1) ausgebildet ist.

7. Vorrichtung nach einem der Ansprüche 5 und 6, dadurch gekennzeichnet, daß die zweite Oberfläche (42) ein gekrümmtes Profil mit nach und nach abnehmendem Radius (42A) derart gefolgt von einem ebenen Teil (42B) hat, daß dem Steuerorgan (4) eine stabile Position einer Teilauskupplung verliehen wird.

8. Vorrichtung nach einem der Ansprüche 1 bis 7, dadurch gekennzeichnet, daß die vierte Oberfläche (44) derart eben ist, daß dem Steuerorgan (4) eine stabile Position der totalen Auskupplung verliehen wird.

# FIG. 1

# FIG. 2

# FIG. 3

1

## FIG.4

## FIG.5